# EUROPEAN PATENT SPECIFICATION

(11) **EP 2 067 281 B1**
(45) Date of publication and mention of the grant of the patent: **16.03.2011**
(21) Application number: 07865539.6
(22) Date of filing: 12.12.2007
(51) Int. Cl.: H04B 7/185

(54) **APPARATUS AND METHOD FOR COOPERATIVE EMPLOYMENT WITH INSTALLED AIRBORNE APPLICATION CONTROL SYSTEM**
VERFAHREN UND GERÄT ZUM MITARBEITEN MIT EINER STEUERUNGSANORDNUNG FÜR ANWENDUNGEN DIE IN EINEM FLUGZEUG EINGEBAUT SIND
APPAREIL ET PROCÉDÉ PERMETTANT UN FONCTIONNEMENT COOPÉRATIF AVEC UN SYSTÈME DE COMMANDE D'APPLICATIONS DE BORD INSTALLÉES

(30) Priority: 22.12.2006 US 615273
(43) Date of publication of application: 10.06.2009
(73) Proprietor: The Boeing Company, Chicago, IL 60606-2016 (US)
(72) Inventor: MILLER, Dean C, Clinton, Washington 98236 (US); HUR, Katerina, Sunnyvale, California 94087 (US); MUSE, Galen B, Redmond, Washington 98052 (US); O'BRIEN, Kevin, San Diego, California 92130 (US)
(74) Representative: McLeish, Nicholas Alistair Maxwell
(86) International application number: PCT/US2007/087159
(87) International publication number: WO 2008/079681

(56) References cited:
- FR-A1- 2 877 518
- US-A1- 2002 082 008
- US-A1- 2002 119 758
- US-B1- 6 282 417

## Description

### BACKGROUND

Some applications for carrying out operational aspects of operating an aircraft while aloft are known. Communication with ground-based entities during carrying out such operational applications is sometimes desirable. By way of example and not by way of limitation, one prior art system is known as a Cabin Network Application System (CNAS). CNAS systems are installed aboard aircraft for accomplishing a number of different applications. Such a suite of applications may be provided as a basic application suite by a manufacturer. However, individual customers may desire different or additional applications be amenable to carrying out by a CNAS on their particular aircraft. By way of example and not by way of limitation, different customers (e.g., different airlines) may desire different capabilities for their respective CNAS systems.

A manufacturer may find it desirable to equip a basic CNAS system for all aircraft and all airline customers, while providing a capability for adding or changing applications when the CNAS system is installed or after the CNAS system is installed. One way to provide such a capability is to provide a capability to install different applications in CNAS systems using a modular installation arrangement whereby individual applications may be installed as individual modules in a host CNAS system. However, individual applications (modules) may require differing administrative or other on-board "overhead" support. A system, such as a CNAS system, can become complicated and therefore costly if one must design such a system to include all administrative or other "overhead" programs or other support in anticipation of whatever modular applications may be installed in the CNAS system.

US 2002/0082008 describes an aircraft cockpit telephony system where a flight crew communication console is arranged to allow the flight crew to originate and receive telephone communication over the passenger telephone communication system through the existing flight communication interface.

### SUMMARY

It would be desirable to be able to provide only what a particular customer desires in that customer's aircraft application suite. Such a capability would permit less expensive, more capable and more compact application systems than would be achievable if one had to design a system capable of accommodating all possible applications that a customer may desire. Weight and space are important considerations in designing aircraft, and such a customizable approach would be useful in designing application systems having only the capabilities (and, therefore, only the weight and space) required for the customer's desired application suite.

There is a need for an apparatus and method for customizing an aircraft application system that is amenable to installing a customized application suite.

There is a need for an apparatus and method for cooperative employment with an installed airborne application control system. The introduction of networked communication systems into the aviation business allows each aircraft to become a node in an airline's or other organization's information network instead of being an isolated entity that must be communicated with via paper, removable storage media or other manual methods. The operation of, maintenance for and passenger services within each aircraft can be made more efficient and offer more services by utilizing onboard software applications to utilize network communications instead of using manual methods. The CNAS system provides a framework to host and control airborne network applications.

An apparatus configured for cooperative employment with an installed airborne application control system in an aircraft includes: an application control unit coupled with the application control system for cooperating with the airborne application control system to effect control of at least one second airborne application. The application control unit includes a respective application management section for participating in management of each respective second airborne application of the at least one second airborne application.

A method for cooperative operation with an installed airborne application control system operating at least one first airborne application in an aircraft to effect control of at least one second airborne application, the airborne application control system being coupled with an airborne communication interface unit for effecting the operating in communication with at least one ground station, includes: (a) providing an application control unit coupled with the application control system; and (b) operating the application control unit cooperatively with the airborne application control system to effect control of at least one second airborne application. The application control unit includes a respective application management section for participating in management of each respective second airborne application of the at least one second airborne application.

It is therefore a feature of the present invention to provide an apparatus and method for customizing an aircraft application system that is amenable to installing a customized application suite.

It is a further feature of the present invention to provide an apparatus and method for cooperative employment with an installed airborne application control system.

Further features of the present invention will be apparent from the following specification and claims when considered in connection with the accompanying drawings, in which like elements are labeled using like reference numerals in the various figures, illustrating the preferred embodiments of the invention.

### BRIEF DESCRIPTION OF THE DRAWINGS

FIG. 1 is a schematic diagram of the apparatus of the present invention.
FIG. 2 is a flow chart illustrating the method of the present invention.

### DETAILED DESCRIPTION

The term "locus" is intended herein to indicate a place, location, locality, locale, point, position, site, spot, volume, juncture, junction or other identifiable location-related zone in one or more dimensions. A locus in a physical apparatus may include, by way of example and not by way of limitation, a corner, intersection, curve, line, area, plane, volume or a portion of any of those features. A locus in an electrical apparatus may include, by way of example and not by way of limitation, a terminal, wire, circuit, circuit trace, circuit board, wiring board, pin, connector, component, collection of components, sub-component or other identifiable location-related area in one or more dimensions. A locus in a flow chart may include, by way of example and not by way of limitation, a juncture, step, site, function, query, response or other aspect, step, increment or an interstice between junctures, steps, sites, functions, queries, responses or other aspects of the flow or method represented by the chart.

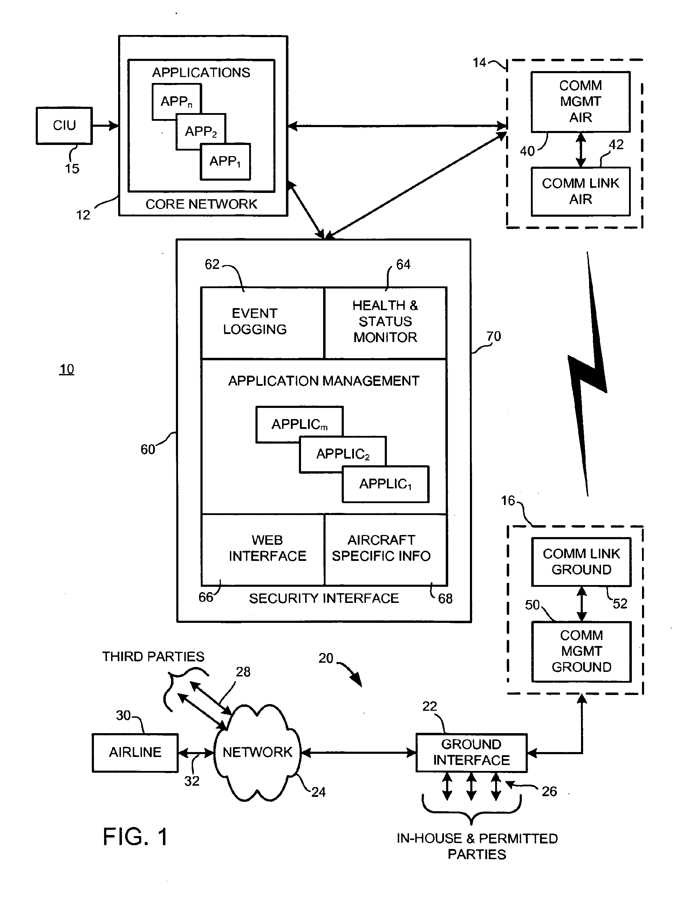

FIG. 1 is a schematic diagram of the apparatus of the present invention. In FIG. 1, an application control system 10 may include an airborne core network 12 coupled with an airborne communication interface unit 14. Airborne core network 12 may be embodied in any structure involving airborne servers, processing devices or network controllers. Application control system 10 may further include a ground communication interface unit 16 in wireless communication with airborne communication interface unit 14. Ground communication interface unit 16 may be coupled for communication with a ground station 20. Ground station 20 may include a ground portal or ground interface unit 22 coupled with a network 24. Network 24 may be comprised of more than one network coupled for inter-communication, but is illustrated as a single network 24 here for purposes of simplicity. In-house parties and permitted parties may communicate with application control system 10 via ground interface unit 22, as indicated at IO (Input-Output) locus 26. Third parties such as, by way of example and not by way of limitation, contractors or other support entities for airline operations may communicate with application control system 10 via a network IO locus 28. Another communication capability may be provided for other airline-related entities 30 for communication with application control system 10 via an airline network IO locus 32.

Airborne communication interface unit 14 and ground communication interface unit 16 may be similar in configuration. Airborne communication interface unit 14 may include an airborne communication management unit 40 and an airborne communication link unit 42. Airborne communication management unit 40 may be configured for establishing, maintaining and managing data communication between an aircraft (not shown in FIG. 1) and ground station 20 via ground communication interface unit 16. It is preferred that all off-aircraft communications use airborne communication management unit 40. Airborne communication link unit 42 may be configured for establishing and maintaining data communication links between an aircraft and ground station 20 via ground communication interface unit 16.

Ground communication interface unit 16 may include a ground communication management unit 50 and a ground communication link unit 52. Ground communication management unit 50 may be configured for establishing, maintaining and managing data communication between ground station 20 and airborne communication interface unit 14 installed in an aircraft (not shown in FIG. 1). It is preferred that all communication with the aircraft use ground communication management unit 50. Ground communication link unit 52 may be configured for establishing and maintaining data communication links between ground station 20 and an aircraft via airborne communication interface unit 14.

Airborne communication management unit 40 and ground communication unit 50 are preferably generally similar in function and structure. Ground communication management unit 50 may include more functionality, may communicate with more varied parties and may include more hardware, software and other parts. This is because there generally is no need for weight considerations or space considerations in designing and installing ground equipment as there must be in designing equipment to be flown aloft. Nevertheless, one may understand that both communication management units 40, 50 perform similar functions, such as by way of example and not by way of limitation, for outbound messages (and files), inspecting message type, message priority, and business rules to schedule message delivery to the other segment (i.e., to ground station 20 or to the aircraft; not shown in FIG. 1). Message delivery can be immediate or delayed. Immediate message delivery method sends a message right away so long as a communication channel is available. Delayed message delivery method handles messages that do not have to be sent right away, but that can be stored for some period of time before sending.

For inbound messages (and files) inspecting message destination and business rule information to determine which application(s) should receive the message (or file) and how to deliver the message. By way of example and not by way of limitation, some messages may be delivered using a "push" arrangement by which messages are automatically delivered to the destination or addressee; other messages may be delivered using a "pull" arrangement by which messages are retrieved from the source at a time determined by the destination or addressee.

Airborne core network 12 may include a plurality of applications APP₁, APP₂, APPₙ. The indicator "n" is employed to signify that there can be any number of applications in airborne core network 12. The inclusion of three applications APP₁, APP₂, APPₙ in FIG. 1 is illustrative only and does not constitute any limitation regarding the number of applications that may be included in the core network of the present invention.

Each respective application APPₙ is preferably an independent software module (by way of example and not by way of limitation installed in a Line Replaceable Module; LRM) installed within airborne core network 12 to perform a predetermined function or task relating to operation of, maintenance on or passenger services within the aircraft. Applications APPₙ may be embodied in software, in hardware, in firmware or in a combination of such formats or with another application format. Access to applications APPₙ may be hardwired (not shown in FIG. 1) or may be established by a user via a Crew Interface Unit (CIU) 15 or a similar user interface unit.

Core network 12 operating in application control system 10 is preferably able to communicate with aircraft buses, airline crew members, and other applications (airborne and ground). In general, applications APPₙ communicate with aircraft devices and crew members, and manipulate and send data to airline infrastructure systems at ground station 20 or in communication with ground station 20 for processing.

Ground station 20 may provide the administrative support for applications APPₙ and provide connectivity to the airline infrastructure system, such as in-house and permitted parties via IO locus 26, third parties via IO locus 28 and airline 30 via IO locus 32. Some applications APPₙ may provide the airplane and crew with information, such as weather data from third party sources. Application control system 10 is intended to foster ready exchanging of information between an aircraft and a related ground-based infrastructure system.

Software, hardware, firmware and combinations of those formats or with other formats at ground interface unit 22 may perform administrative functions for application control system 10. Ground interface unit 22 may be the primary interface to application control system 10 by a ground-based user. A ground-based user wishing to communicate with an airborne portion of application control system 10 may make a request at ground interface unit 22. Ground interface unit 22 may send the data or other communication to the requested destination. Some data may be routed through, recorded, and stored by ground interface unit 22.

A support apparatus 60 may be provided for supporting operation of core network 12. More specifically, support apparatus 60 may be configured to support the application suite installed in the particular core network 12 with which support apparatus 60 is installed. Support apparatus 60 may be coupled with core network 12 and may be coupled with airborne communication interface unit 14. Support apparatus 60 may include application management units APPLIC₁, APPLIC₂, APPLICₘ configured and coupled for supporting operations of applications APP₁, APP₂, APPₙ in core network 12. The indicator "m" is employed to signify that there can be any number of application management units in support services apparatus 60. The inclusion of three application management units APPLIC₁, APPLIC₂, APPLICₘ in FIG. 1 is illustrative only and does not constitute any limitation regarding the number of application management units that may be included in the support apparatus of the present invention.

It is preferred that each respective application management unit APPLICₘ is configured as an independent module installed within application control system 10 to support applications APPₙ in performing predetermined functions or tasks relating to operation of the aircraft. An application management unit APPLICₘ may cooperate with core network 12 to operate an application APPₙ. Alternatively, core network 12 may operate one or more of applications APP₁, APP₂, APPₙ independently of application management units APPLIC₁, APPLIC₂, APPLICₘ. It is preferred that there be at least as many application management units APPLICₘ installed in support apparatus 60 as there are applications APPₙ installed in core network 12. Said another way, it is preferred that m ≥ n, and most preferred that m = n.

Each respective application management unit APPLICₘ may be embodied in software, in firmware, in hardware or in a combination of software, firmware and hardware. It is most preferred that application management units APPLICₘ be embodied in software. Each respective application management unit APPLICₘ may host one or more application APPₙ.

Support apparatus 60 preferably provides infrastructure services or capabilities used by core network 12 in operating or exercising applications APPₙ. Support apparatus 60 may include functional capabilities that are tapped or employed by application management units APPLICₘ. Alternately, each respective application management unit may include its own respective functional capability and not require interaction with other portions or features of support apparatus 60 in providing support for an application APPₙ. In the preferred embodiment of support apparatus 60 illustrated in FIG. 1, support apparatus 60 may include a plurality of functional capabilities used by application management units APPLICₘ. An event logging capability 62 may accept log entries from an application APPₙ to create an event log for periodic transmission to ground station 20. A health and status capability 64 may collect operational status information from applications APPₙ on a periodic basis via any one or more of a variety of ways, including by way of example and not by way of limitation, using capabilities of a Simple Network Management Protocol (SNMP). A web interface capability 66 may provide a web browser interface to airborne elements of application control system 10, such as by way of example and not by way of limitation, to crew members via a CIU or via one or more respective applications APPₙ. An aircraft-specific information capability 68 may provide access for application management units APPLICₘ to aircraft-specific avionics system data bases. A security interface 70 may be provided for effecting user authentication, authorization and access control using user account data bases which may be resident, by way of example and not by way of limitation, in ground station 20, in core network 12, elsewhere in application control system 10 or otherwise available to application control system 10. Capabilities 62, 64, 66, 68, 70 may be embodied in software, in hardware, in firmware or in a combination of such formats or with another application format.

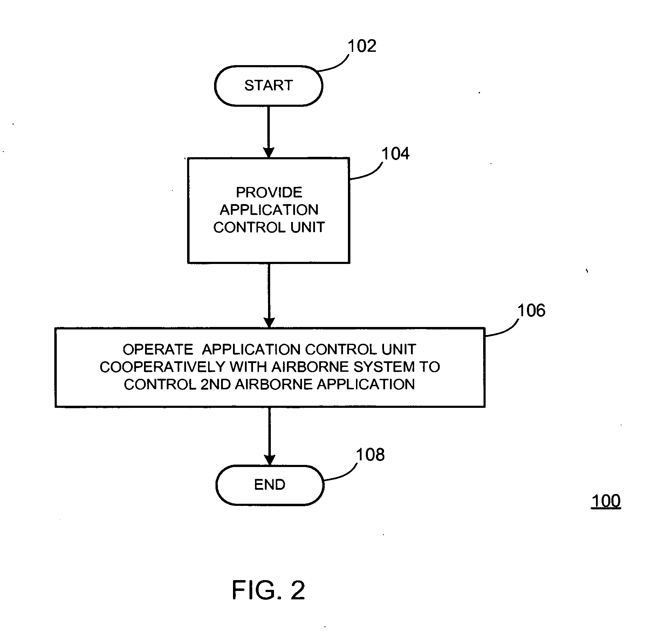

FIG. 2 is a flow chart illustrating the method of the present invention. In FIG. 2, a method 100 for cooperative operation with an installed airborne application control system operating at least one first airborne application in an aircraft to effect control of at least one second airborne application begins at a START locus 102. The airborne application control system is coupled with an airborne communication interface unit for effecting the operating in communication with at least one ground station. Method 100 continues by providing an application control unit coupled with the application control system, as indicated by a block 104. Method 100 continues by operating the application control unit cooperatively with the airborne application control system to effect control of at least one second airborne application, as indicated by a block 106. The application control unit includes a respective application management section for participating in management of each respective second airborne application of the at least one second airborne application. Method 100 terminates at an END locus 108.

It is to be understood that, while the detailed drawings and specific examples given describe preferred embodiments of the invention, they are for the purpose of illustration only, that the apparatus and method of the invention are not limited to the precise details and conditions disclosed and that various changes may be made therein without departing from the scope of the invention which is defined by the following claims:

## Claims

1. An apparatus for installation in an aircraft having a core network (12), wherein the core network includes a plurality of applications, each respective application is arranged to perform a predetermined function relating to operation of, maintenance on or passenger services with the aircraft and a communication interface unit (14) arranged to transmit data generated by the plurality of applications to a ground station, the apparatus comprising an application management unit (60) arranged to operate the plurality of applications.

2. An apparatus according to Claim 2 wherein said application management unit (60) is coupled with said communication interface unit.

3. An apparatus according to Claim 1 or 2 wherein said application management unit (60) comprises at least one administrative functional unit.

4. An apparatus according to Claim 3 wherein said at least one administrative functional unit comprises a web interface unit for enabling web-related operations.

5. An apparatus according to Claim 3 wherein said at least one administrative functional unit comprises an event logging unit for logging predetermined events related to an application management section.

6. An apparatus according to Claim 3 wherein said at least one administrative functional unit comprises a health and status monitor unit for monitoring health and status of an application management section.

7. An apparatus according to Claim 3 wherein said at least one administrative functional unit comprises an independent security unit.

8. An apparatus according to Claim 3 wherein said at least one administrative functional unit comprises a store of information related to said aircraft.

## Patentansprüche

1. Vorrichtung zur Installation in einem, mit einem Verbindungsnetzwerk (12) ausgestatteten Luftfahrzeug, wobei das Verbindungsnetzwerk mehrere Anwendungsprogramme aufweist, von denen jedes zur Ausführung einer vorgegebenen Funktion im Zusammenhang mit dem Betrieb, dem Unterhalt oder der Fahrgastbetreuung in dem Luftfahrzeug ausgebildet ist, sowie eine Kommunikationsschnittstelleneinheit (14), die zum Übertragen der von den mehreren Anwendungsprogrammen erzeugten Daten an eine Bodenstation ausgebildet ist, und wobei die Vorrichtung eine zur Ausführung der mehreren Anwendungsprogramme ausgebildete Anwendungsprogrammverwaltungseinheit (60) umfasst.

2. Vorrichtung nach Anspruch 2, worin die Anwendungsprogrammverwaltungseinheit (60) mit der Kommunikationsschnittstelleneinheit verbunden ist.

3. Vorrichtung nach Anspruch 1 oder 2, worin die Anwendungsprogrammverwaltungseinheit (60) zumindest eine administrative Funktionseinheit umfasst.

4. Vorrichtung nach Anspruch 3, worin die zumindest eine administrative Funktionseinheit eine Webschnittstelle zum Ausführen webbezogener Vorgänge umfasst.

5. Vorrichtung nach Anspruch 3, worin die zumindest eine administrative Funktionseinheit eine Ereignisprotokollierungseinheit zum Protokollieren von Ereignissen umfasst, die einen Bezug zu einem Anwendungsprogrammverwaltungsbereich aufweisen.

6. Vorrichtung nach Anspruch 3, worin die zumindest eine administrative Funktionseinheit eine Funktions- und Zustandsüberwachungseinheit zur Überwachung von Funktion und Zustand eines Anwendungsprogrammverwaltungsbereichs aufweist.

7. Vorrichtung nach Anspruch 3, worin die zumindest eine administrative Funktionseinheit eine unabhängige Sicherheitsschnittstelle umfasst.

8. Vorrichtung nach Anspruch 3, worin die zumindest eine administrative Funktionseinheit einen auf das Luftfahrzeug bezogenen Informationsvorrat aufweist.

## Revendications

1. Appareil pour installation dans un aéronef ayant un réseau d'infrastructure (12), où le réseau d'infrastructure comporte une pluralité d'applications, chaque application respective est agencée pour exécuter une fonction prédéterminée se rapportant à l'opération de, maintenance sur ou services des passagers avec l'aéronef et une unité d'interface de communication (14) agencée pour transmettre des données produites par la pluralité d'applications à une station au sol, l'appareil comprenant une unité de gestion d'applications (60) agencée pour faire fonctionner la pluralité d'applications.

2. Appareil selon la revendication 1, dans lequel ladite unité de gestion d'applications (60) est couplée à ladite unité d'interface de communication.

3. Appareil selon la revendication 1 ou 2, dans lequel ladite unité de gestion d'applications (60) comprend au moins une unité fonctionnelle administrative.

4. Appareil selon la revendication 3, dans lequel ladite au moins une unité fonctionnelle administrative comprend une unité d'interface web pour permettre des opérations liées au web.

5. Appareil selon la revendication 3, dans lequel ladite au moins une unité fonctionnelle administrative comprend une unité de journalisation d'événements pour la journalisation d'événements prédéterminés liés à une section de gestion d'applications.

6. Appareil selon la revendication 3, dans lequel ladite au moins une unité fonctionnelle administrative comprend une unité de survaillance de santé et d'état pour surveiller la santé et l'état d'une section de gestion d'applications.

7. Appareil selon la revendication 3, dans lequel ladite au moins une unité fonctionnelle administrative comprend une unité de sécurité indépendante.

8. Appareil selon la revendication 3, dans lequel ladite au moins une unité fonctionnelle administrative comprend une banque de données liée audit aéronef.
